Europäisches Patentamt

European Patent Office

Office européen des brevets

(11) Numéro de publication: **0 309 847 B1**

# FASCICULE DE BREVET EUROPEEN

(45) Date de publication de fascicule du brevet:
**15.01.92**

(21) Numéro de dépôt: **88115313.4**

(22) Date de dépôt: **19.09.88**

(51) Int. Cl.5: **G01B 7/02**, G01B 7/28

(54) **Dispositif pour la mesure sans contact de la position d'une première pièce par rapport à une seconde pièce.**

(30) Priorité: **28.09.87 FR 8713380**

(43) Date de publication de la demande:
**05.04.89 Bulletin 89/14**

(45) Mention de la délivrance du brevet:
**15.01.92 Bulletin 92/03**

(84) Etats contractants désignés:
**AT BE CH DE ES FR GB IT LI NL SE**

(56) Documents cités:
US-A- 4 005 601
US-A- 4 022 133

PATENT ABSTRACTS OF JAPAN, vol. 7, no. 18 (P-170)[1163], 25 janvier 1983, page 89 P 170; & JP-A-57 173 701 (NIPPON KOKUYU TETSUDO) 26-10-1982

(73) Titulaire: **GEC ALSTHOM SA**
**38, avenue Kléber**
**F-75116 Paris(FR)**

Titulaire: **INSTITUT NATIONAL DE RECHER-CHE SUR LES TRANSPORTS ET LEUR SE-**

CURITE
**2, avenue du Général Malleret Joinville**
**F-94114 Arceuil Cédex(FR)**

Titulaire: **Régie Autonome des Transports Parisiens**
**53 ter, Ouai des Grands-Augustins**
**F-75006 Paris(FR)**

(72) Inventeur: **Chollet, Hugues Institut National de Recherche**
**Sur les Transports et leur Sec. 2 Av. du Général**
**Malleret Joinville F-94114 Arceuil Cédex(FR)**
Inventeur: **Maupu, Jean-Louis Institut National de Recherche**
**Sur les Transports et leur Sec. 2, Av. du Général**
**Malleret Joinville F-94114 Arceuil Cédex(FR)**
Inventeur: **Petit, Jean-Michel**
**13 Avenue Faidherbe**
**F-93310 Le Pré Saint Geravis(FR)**

(74) Mandataire: **Weinmiller, Jürgen**
**Lennéstrasse 9 Postfach 24**
**W-8133 Feldafing(DE)**

EP 0 309 847 B1

## Description

La présente invention se rapporte à un dispositif pour la mesure sans contact de la position d'une première pièce par rapport à une seconde pièce ferromagnétique dans une direction tangente à la surface les séparant, à travers celle-ci, et indépendamment des variations de la position dans une direction normale à cette surface.

En particulier la première pièce est liée à un essieu ferroviaire et la seconde pièce est l'un des rails de la voie sur laquelle roule cet essieu, la mesure étant transversale à l'axe de la voie. On remarque que dans ce cas, à cause des aiguillages, appareils de voie, passages à niveau, etc., il est difficile de mettre un capteur sous le plan de roulement, et que les vitesses de déplacement élevées requièrent un capteur sans contact.

Avec une paire de ces dispositifs, devant et derrière une roue de l'essieu, on peut être informé de la position transversale et angulaire de l'essieu par rapport à la voie, ce que permet de réaliser des bogies à essieux orientables.

On connaît des documents US-A- 3 515 984 et Patent Abstracts of Japan, vol 7, no. 18 (P-170) [1163], 25 janvier 1983, page 89 P 170 des dispositifs pour mesurer les déplacements des rails par rapport au dispositif de mesure, basés sur le principe que l'impédence dans des bobines varie quand le dispositif de mesure se déplace par rapport aux rails.

Un but de l'invention est de réaliser un dispositif simple et robuste capable de résister aux vibrations et chocs incessants auxquels est soumis l'essieu ferroviaire et de se rendre indépendant des variations verticales (usure de roue, tangage de l'essieu, dispositif suspendu...).

Conformément à l'invention, la première pièce comprend une boîte étanche, fixée sur l'essieu avec éventuellement une suspension purement verticale, dans laquelle un aimant peut se mouvoir dans la direction de mesure ; ce mouvement est soit linéaire, soit rotatif d'angle faible et dans ce cas son axe est situé de préférence dans le plan de symétrie du rail en position moyenne.

L'aimant et la deuxième pièce rail constituent un circuit magnétique à réluctance variable. Les forces d'interaction entre l'aimant et le rail les maintiennent de façon stable dans une position transversale donnée, indépendante de la position verticale (position de réluctance minimale en transversal). La position relative de l'aimant par rapport à la boîte est alors mesurée par un capteur classique. On utilise avantageusement un synchrorésolveur pour cette mesure. Dans le cas de mouvement rotatif il mesure l'angle de rotation de l'axe du support de l'aimant, la rotation est de préférence d'axe vertical.

L'invention sera bien comprise par la description donnée ci-après de deux modes de réalisation de l'invention, en référence au dessin annexé dans lequel,

- la figure 1 est une vue en élévation en coupe selon la ligne I-I de la figure 2 d'un dispositif selon l'invention, dans un premier mode de réalisation,
- la figure 2 est une vue en coupe du même dispositif selon la ligne II-II de la figure 1,
- la figure 3 est une vue de dessus en demi-coupe du même dispositif.
- la figure 4 est une vue en élévation en coupe selon la ligne IV-IV de la figure 5 d'un dispositif selon l'invention, dans un second mode de réalisation,
- la figure 5 est une vue du même dispositif en coupe selon la ligne V-V de la figure 4,
- la figure 6 est une vue de dessus en demi-coupe du même dispositif.

L'exemple de réalisation qui va être décrit se rapporte à un dispositif pour la mesure de position d'un essieu par rapport à la voie de roulement.

Dans les figures, la référence 1 désigne globalement le dispositif de mesure, fixé à un essieu non représenté, et disposé de manière à rester à proximité d'un rail 2 sur lequel roule l'essieu.

Le dispositif comprend un carter 3 en matériau amagnétique délimitant une chambre 4 fermée par une plaque 5 en même matériau.

Un arbre 6 peut pivoter dans deux paliers 7 et 8 réalisés par exemple avec des roulements à aiguille ou en polytétrafluoroéthylène (marque déposée Téflon).

Le carter est fixé à l'essieu de telle sorte que l'arbre 6 soit en moyenne dans le plan P de symétrie longitudinale du rail 2.

L'arbre porte une tôle 9 pliée, en métal amagnétique (acier inoxydable par exemple), sur laquelle est fixé un aimant permanent 10.

La direction d'aimantation de l'aimant peut être perpendiculaire au plan P précité.

L'aimant est de préférence un barreau parallélépipédique en samarium-cobalt.

La plaque 5 comprend une portion amincie 5A pour que l'aimant soit placé près du rail et que le circuit magnétique constitué par l'aimant 10 et le rail 2 ait une réluctance relativement faible.

L'aimant est alors assujetti à rester dans la même position transversale vis-à-vis du rail. Ainsi, un déplacement transversal du carter par rapport au rail provoque une rotation de l'arbre 6.

La mesure de la rotation de l'arbre 6 fournit la mesure d'un degré de liberté de l'essieu. Deux dispositifs de ce type, placés respectivement devant et derrière l'essieu, fournissent sa position angulaire et sa position transversale par rapport au rail.

On peut utiliser tout type d'organe de mesure, mais il est avantageux de se servir d'un synchro-résolveur 11 qui peut être placé dans une cavité de la partie supérieure du carter et fixé par un joint torique 12 assurant une étanchéité vis-à-vis des agents extérieurs.

La cavité est fermée par un couvercle 13.

Un passage 14 dans le carter permet de placer les fils électriques de liaison du synchro-résolveur.

On note que la plaque métallique 5 est le siège, lorsque l'aimant 10 se déplace, de courants de Foucault qui ont pour effet d'amortir le mouvement de l'aimant.

L'appareil est donc peu sensible aux multiples chocs et vibrations engendrés par un essieu en mouvement sur un rail.

Le capteur de l'invention est robuste et suffisamment précis pour permettre d'élaborer un signal utilisable dans un circuit d'asservissement de l'orientation d'un essieu.

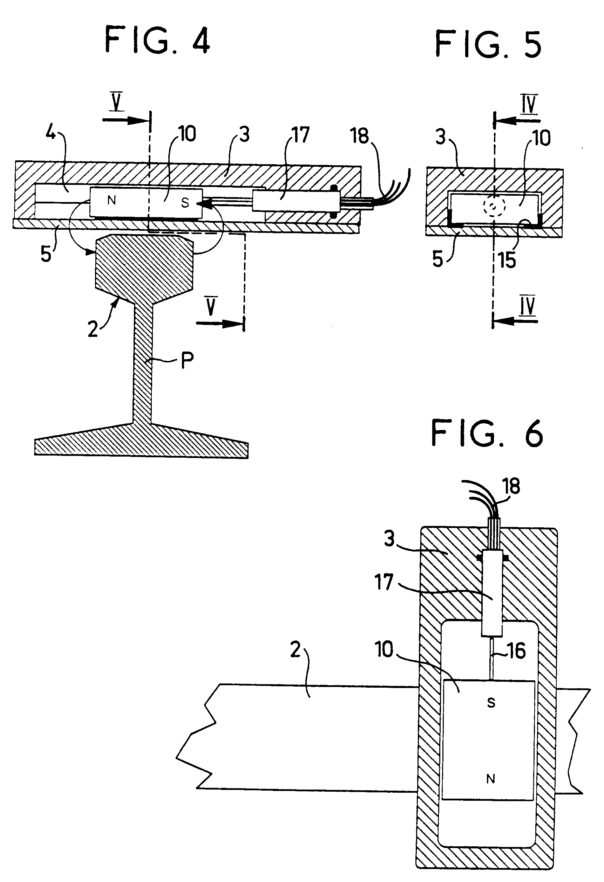

Les figures 4 à 6 illustrent une variante de réalisation du dispositif de l'invention dans lequel l'aimant est assujetti à se déplacer en translation dans le carter.

Les éléments communs aux deux modes de réalisation illustrés dans les deux groupes figure ont reçu les mêmes numéros de référence.

L'aimant 10 est assujetti à ne subir que des déplacements en translation à l'intérieur du carter 3-5 ; un revêtement plastique 15 à l'intérieur de la boîte facilite le glissement de l'aimant.

La meilleur sensibilité est obtenue en disposant l'aimant de manière que sa direction d'aimantation (donc de déplacement) soit sensiblement dans un plan horizontal et perpendiculaire au rail.

La déplacement de l'aimant est mesuré électriquement en dotant l'aimant d'une tige 16 qui lui est solidaire et fait partie d'un capteur de déplacement linéaire qui peut être un circuit capacitif ou inductif 17 placé dans une cavité du carter et muni de conducteurs de sortie 18.

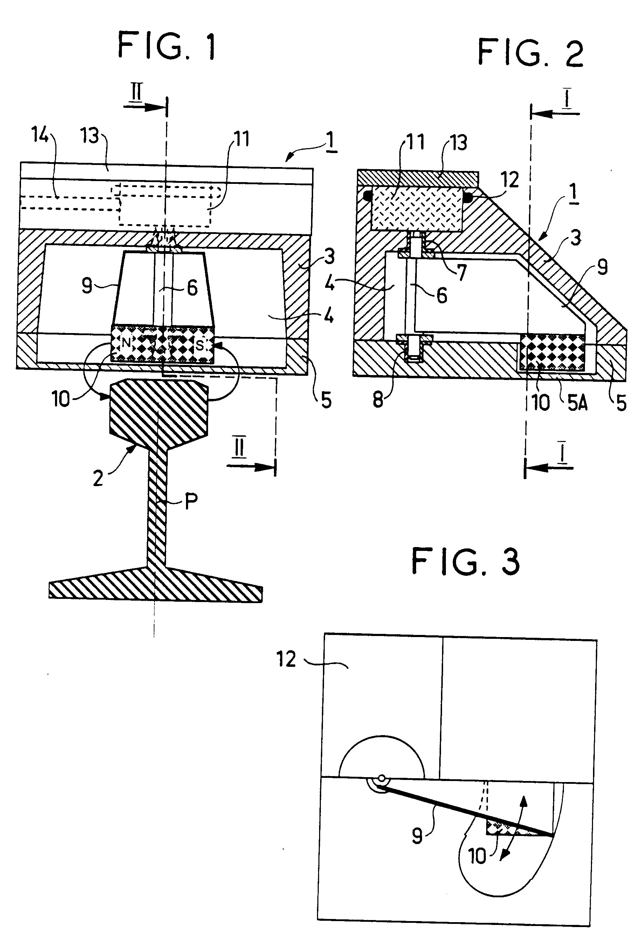

Cette variante de réalisation possède les mêmes qualités que le dispositif décrit en regard des figures 1 à 3.

## Revendications

1. Dispositif pour la mesure de position sans contact d'une première pièce par rapport à une seconde pièce, caractérisé en ce qu'il comprend un aimant (10) ayant avec la première pièce au moins un degré de liberté tangent à la direction de mesure et coopérant avec une portion magnétique liée à la seconde pièce, et un organe de mesure (11) de la position de l'aimant par rapport à la première pièce.

2. Dispositif selon la revendication 1 caractérisé en ce que l'aimant (10) est lié rigidement à un arbre (6), tournant par rapport à la première pièce, ledit organe de mesure (11), étant un capteur d'angle.

3. Dispositif selon la revendication 1, caractérisé en ce que l'aimant (10) est assujetti à ne se déplacer qu'en translation par rapport à la première pièce, ledit organe de mesure étant un capteur de déplacement linéaire (17).

4. Dispositif selon l'une des revendications 1 et 2, caractérisé en ce que ledit arbre, ledit aimant et ledit organe de mesure, sont disposés à l'intérieur d'un carter étanche fixé à la première pièce.

5. Dispositif selon l'une des revendications 2 et 4, caractérisé en ce que ledit organe de mesure (11) est un synchro-résolveur.

6. Dispositif selon l'une des revendications 1 à 5, caractérisé en ce que la première pièce est une traverse d'un essieu pour véhicule ferroviaire, la seconde pièce étant l'un (2) des rails de la voie de roulement dudit essieu.

7. Dispositif selon la revendication 6, caractérisé en ce que la direction d'aimantation de l'aimant (10) est sensiblement perpendiculaire audit rail (2).

## Claims

1. A device for the contactless measurement of the position of a first member in relation to a second member, characterized in that it includes a magnet (10) having at least one degree of freedom with the first member, tangent to the direction of measuring and cooperating with a magnetic portion linked to the second member, and a measuring element (11) for measuring the position of the magnet in relation to the first member.

2. A device according to claim 1, characterized in that the magnet (10) is fitted rigidly to a shaft (6) rotating with respect to said first member, said measuring element (11) being an angle position sensor.

3. A device according to claim 1, characterized in that the magnet (10) is constrained to move only in translation in relation to the first member, said measuring element being a linear-motion sensor (17).

**4.** A device according to claim 1 or 2, characterized in that said shaft, said magnet and said measuring element are disposed within a tight box integral with the first member.

**5.** A device according to claim 2 or 4, characterized in that said measuring element (11) is a synchro resolver.

**6.** A device according to one of claims 1 through 5, characterized in that the first member is a crossbar of an axle for a railway vehicle, the second member being one (2) of the rails of the track on which the axle runs.

**7.** A device according to claim 6, characterized in that the direction of magnetization of the magnet (10) is substantially perpendicular to said rail (2).

**Patentansprüche**

**1.** Vorrichtung zur kontaktlosen Messung der Position eines ersten Körpers relativ zu einem zweiten Körper, dadurch gekennzeichnet, daß sie einen Magneten (10) aufweist, der mit dem ersten Körper mindestens einen Freiheitsgrad tangential zur Meßrichtung besitzt und mit einem mit dem zweiten Körper verbundenen magnetischen Abschnitt zusammenwirkt, und daß sie ein Organ (11) zum Messen der Position des Magneten relativ zum ersten Körper aufweist.

**2.** Vorrichtung nach Anspruch 1, dadurch gekennzeichnet, daß der Magnet (10) starr mit einer Welle (6) verbunden ist, die sich relativ zum ersten Körper drehen kann, wobei das Meßorgan (11) ein Winkelsensor ist.

**3.** Vorrichtung nach Anspruch 1, dadurch gekennzeichnet, daß der Magnet (10) so gefaßt ist, daß er sich relativ zum ersten Körper nur in Längsrichtung verschieben kann, wobei das Meßorgan ein Linearverschiebungssensor (17) ist.

**4.** Vorrichtung nach einem der Ansprüche 1 und 2, dadurch gekennzeichnet, daß die Achse, der Magnet und das Meßorgan im Inneren eines dichten Gehäuses angeordnet sind, das am ersten Körper befestigt ist.

**5.** Vorrichtung nach einem der Ansprüche 2 und 4, dadurch gekennzeichnet, daß das Meßorgan (11) ein Synchro-Resolver ist.

**6.** Vorrichtung nach einem der Ansprüche 1 bis 5, dadurch gekennzeichnet, daß der erste Körper ein Querträger einer Radachse für ein Schienenfahrzeug ist, während der zweite Körper eine (2) der Schienen des Fahrwegs der Radachse bildet.

**7.** Vorrichtung nach Anspruch 6, dadurch gekennzeichnet, daß die Magnetisierungsrichtung des Magneten (10) im wesentlichen senkrecht zu dieser Schiene (2) verläuft.

# FIG. 1

# FIG. 2

# FIG. 3

FIG. 4

FIG. 5

FIG. 6